# EUROPÄISCHE PATENTANMELDUNG

(11) **EP 3 929 112 A1**
(43) Veröffentlichungstag der Anmeldung: **29.12.2021**
(21) Anmeldenummer: 21020323.8
(22) Anmeldetag: 17.06.2021
(51) Int. Cl.: B65G 13/075, B65G 47/26, B65G 47/88, B65G 1/08

(54) **VORRICHTUNG ZUR EINZELKOMMISSIONIERUNG VON ENTLANG EINER ROLLENBAHN BEFÖRDERTEN LADUNGSTRÄGERN**

(30) Priorität: 23.06.2020 DE 102020116529
(71) Anmelder: Dynamic Logistics Systems B.V., 7005 AG Doetinchem (NL)
(72) Erfinder: Berndsen, Roland Manfred, 6942EX Didam (NL); Lietfink, Willem Johan, 7091XG Dinxperlo (NL)
(74) Vertreter: Christophersen & Partner Partnerschaft mbB Patentanwälte

(57) **Zusammenfassung**

Die Erfindung betrifft eine Vorrichtung zur Einzelkommissionierung mit einer in einem Gestell (1) unter Neigung zur Horizontalen angeordneten Rollenbahn (2) mit einem Förderweg (3) für darauf verfahrbare Ladungsträger (4). Eine Bedienklappe (8) ragt in den Förderweg (3) der Rollenbahn (2) und ist durch einen sich entlang des Förderweges (3) bewegenden Ladungsträger (4) betätigbar. Weiterer Bestandteil ist eine in den Förderweg (3) einschwenkbare Sperre (7), wobei diese im Abstand von mindestens einem Ladungsträger (4) von einem am Ende der Rollenbahn (2) angeordneten Anschlag (6) ausgebildet ist. Ebenfalls Bestandteil der Vorrichtung ist ein Verbindungselement, welches zwischen der Bedienklappe (8) und der Sperre (8) angeordnet ist. Die Bedienklappe (8) und die Sperre (7) sind jeweils auf eigenen, sich quer zur Rollenbahn (2) erstreckenden Schwenkachsen (9) in dem Gestell (1) gelagert, wobei das Verbindungselement als eine Schub- und Zugstange (10) ausgebildet ist, die mit ihrem einen Ende mit der Sperre (7) und mit ihrem anderen Ende mit der Bedienklappe (8) durch Gelenke (11) gekoppelt ist. Die Gelenkachsen (12) der Schub- und Zugstange (10) erstrecken sich parallel zu den Schwenkachsen (9), wobei die Schub- und Zugstange (10) einen längenveränderlichen Abschnitt (13) umfasst.

## Beschreibung

Die Erfindung betrifft eine Vorrichtung zur Einzelkommissionierung mit einer in einem Gestell unter Neigung zur Horizontalen angeordneten Rollenbahn mit einem Förderweg, für darauf verfahrbare Ladungsträger, mit einer in den Förderweg der Rollenbahn hineinragenden, durch einen sich entlang des Förderweges bewegenden Ladungsträger betätigbaren Bedienklappe, mit einer im Abstand von mindestens einem Ladungsträger von einem am Ende der Rollenbahn angeordneten Anschlag angeordneten und in den Förderweg einschwenkbaren Sperre sowie mit einem mechanischen Verbindungselement zwischen der Bedienklappe und der Sperre, wobei die Bedienklappe und die Sperre jeweils auf eigenen, sich quer zur Rollenbahn erstreckenden Schwenkachsen in dem Gestell gelagert sind.

Eine Vorrichtung dieser Art ist aus der DE 31 29 318 A1 und aus der EP 1 050 491 A1 bekannt. Eine solche Vorrichtung ist dazu ausgebildet, bei leicht geneigten Rollenbahnen von Palettendurchlaufregalen eine Trennung der vordersten, sich bereits in Entkommissionierungsstellung befindliche Palette und einer nachfolgenden Palette zu gewährleisten. Die Trennung der zweiten Palette von der ersten Palette erfolgt durch eine an einer langen Wippe befestigten Sperre. Diese ist über die Wippe mit einer am Entnahmeende der Rollenbahn angeordneten Klappe wirkverbunden. Die Klappe ist so ausgebildet, dass sie durch eine über sie rollende Palette bedient wird, wobei die Klappe in eine horizontale Position schwenkt. Vertikal und nach unten weisend ist an der Schwenkachse der Klappe ein Fortsatz ausgebildet. An dessen unterem Ende ist quer zur Rollenbahn ein Stift ausgebildet, wobei der Stift in einer horizontalen Langlochbohrung am klappenseitigen Ende der Wippe gleitend gelagert ist. Die Wippe ist an einem Ort zwischen der Sperre und der Klappe verschwenkbar gelagert, wobei die beiden Seiten der Wippe im Gleichgewicht zueinander stehen.

Wird die Klappe nun durch eine darüber liegende Palette in die horizontale Position geschwenkt, wird die Wippe klappenseitig nach unten gedrückt. Somit hebt sich die Wippe sperrenseitig und die Sperre blockiert die Rollenbahn.

Orthogonal zu der Klappe ist auf deren Schwenkachse zusätzlich eine Trittfläche ausgebildet, wobei diese nach oben weisend ausgebildet ist. Die zusätzliche Trittfläche kann sowohl im Bereich des Förderweges auf der Rollenbahn, als auch unmittelbar angrenzend an das Gestell der Rollenbahn ausgebildet sein.

Nachdem die Palette an dem Entnahmeende der Rollenbahn entfernt wurde, muss der Bediener mit seinem Fuß die Trittfläche betätigen, wodurch die Klappe in eine Schräglage geschwenkt wird. Dadurch wird die Wippe klappenseitig angehoben, so dass sich die Wippe sperrenseitig senkt und die Sperre den Förderweg freigibt. Eine weitere Palette kann zu dem Entnahmeende hin rollen.

Die Aufgabe der Erfindung besteht darin, die aus dem Stand der Technik bekannte Vorrichtung zu vereinfachen und so weiterzuentwickeln, dass die Störanfälligkeit, auch bei langfristiger Nutzung und häufiger Belastung, gering ist.

Zur Lösung der Aufgabe wird eine Vorrichtung zur Einzelkommissionierung mit den eingangs genannten Merkmalen vorgeschlagen, deren Bestandteil ein Verbindungselement ist, welches als eine Schub- und Zugstange ausgebildet ist, die mit ihrem einen Ende mit der Sperre und mit ihrem anderen Ende mit der Bedienklappe durch Gelenke gekoppelt ist, deren Gelenkachsen sich parallel zu den Schwenkachsen erstrecken, und wobei die Schub- und Zugstange einen längenveränderlichen Abschnitt umfasst.

Gemäß einer ersten und zweiten Ausführungsform ist vorzugsweise bei angehobener Stellung der Bedienklappe die Schub- und Zugstange auf Zug belastet, wobei die Sperre den Förderweg nicht blockiert. Mit anderen Worten: wird die Bedienklappe entsprechend ihrer vorgesehenen Weise bedient, wird der Förderweg zum Nachrücken eines Ladungsträgers entsperrt.

Jedoch nimmt gemäß der ersten Ausführungsform die Sperre bei nicht auf Druck belasteter Schub- und Zugstange ihre abgesenkte Stellung ein. Bevorzugt blockiert die Sperre bei Kontakt mit einem weiteren Ladungsträger, bei unbelasteter Schub- und Zugstange, den Förderweg weiterhin. Somit gibt die Sperre den Förderweg nur frei, sofern nicht unmittelbar ein weiterer Ladungsträger in Kontakt zu ihr steht.

Gemäß der zweiten Ausführungsform ist ein zweites Federelement bestrebt, die Sperre in eine angehobene Stellung zu bringen, so dass die Sperre bei nicht auf Druck belasteter Schub- und Zugstange und unbelastetem zweiten Federelement den Förderweg blockiert.

Gemein haben beide Ausführungsformen, dass die Sperre in abgesenkter Stellung der Bedienklappe den Förderweg versperrt, also blockiert.

Um die Sperre in der ersten Ausführungsform und in der zweiten Ausführungsform zu entsperren, ist die Bedienklappe eine Platte mit einer oberen, zum Ladungsträger gewandten Seite und einer unteren, von dem Ladungsträger abgewandten Seite, wobei die untere Seite zugleich als eine mit dem Fuß bedienbare Trittfläche dient.

Um die Bewegung der Bedienklappe mechanisch an die Sperre weiterzuleiten, sind die Bedienklappe und die Sperre über die Schub- und Zugstange wirkverbunden. Insbesondere ist dabei ein Bestandteil der Schub- und Zugstange ein längenveränderlicher Abschnitt.

Vorzugsweise umfasst der längenveränderliche Abschnitt einen ersten oder einen zweiten Gleitabschnitt, wobei der erste oder zweite Gleitabschnitt mit einem ersten Ende mittelbar an der Gelenkachse der Sperre oder der Bedienklappe drehgelagert und mit einem zweiten Ende gleitend an der Bedienklappe oder an der Sperre gelagert ist. Bevorzugt ist der erste oder zweite Gleitabschnitt mit dem zweiten Ende in einem Gleitlager angeordnet. Der erste oder zweite Gleitabschnitt weisen vor und hinter dem Gleitlager Aufweitungen auf, die in Längsrichtung der Rollenbahn zueinander beanstandet sind.

Daher besteht die Schub- und Zugstange aus einer Stange, wobei diese mit einem Ende fest an der Sperre oder der Bedienklappe drehbar gelagert ist. Mit dem anderen Ende ist sie auf dem anderen Element in einem drehbaren Gleitlager geführt. Damit eine bestimmte Länge nicht über- oder unterschritten wird, sind auf der Stange beidseitig um das Gleitlager Aufweitungen ausgebildet, die als Längsbeschränkungen dienen und eine bestimmte Beabstandung aufweisen, sodass nur eine bestimmte Maximallänge möglich ist.

Alternativ umfasst der längenveränderliche Abschnitt einen ersten und einen zweiten Gleitabschnitt, wobei der erste Gleitabschnitt zumindest teilweise verschiebbar an dem zweiten Gleitabschnitt gelagert ist. Wobei vorzugsweise der zweite Gleitabschnitt am stirnseitigen Ende, hin zum zweiten Gleitelement, eine Aufweitung aufweist, wobei das erste Gleitelement am stirnseitigen Ende und zum zweiten Gleitelement hin einen innenseitigen Absatz aufweist. Mithin kann die Schub- und Zugstange auch aus zwei Stangen bestehen, die beide so ausgebildet sind, dass sie an- oder aufeinander gleiten können. Die voneinander abgewandten Enden der Stangen sind dann drehbar an der Bedienklappe und der Sperre gelagert.

Um die maximale und minimale Gesamtlänge der beiden Gleitelemente des längenveränderlichen Abschnitts zu beschränken, können an den Gleitelementen Aufweitungen und/oder Absätze ausgebildet sein, die den Rahmen für die mögliche maximale und minimale Länge der Schub- und Zugstange eindeutig festlegen.

Vorzugsweise ist Bestandteil des längenveränderlichen Abschnitts ein erstes Federelement, welches zumindest mit dem ersten und/oder zweiten Gleitabschnitt und/oder zumindest mittelbar mit der Sperre und/oder mit der Bedienklappe gekoppelt ist.

Das erste Federelement ist dazu ausgebildet, sich bei einer Längenveränderung im längenveränderlichen Abschnitt der Schub- und Zugstange, unabhängig der Ausgestaltung des längenveränderlichen Abschnitts, zu verformen und dadurch Formänderungsenergie zu speichern, um diese später, bei Verringerung der Last auf die Schub- und Zugstange, wieder abzugeben. Auch andere Vorrichtungen können verwendet werden, die dazu ausgebildet sind, Formänderungsenergie zu speichern und wieder abzugeben.

Weitere Maßnahmen werden nachstehend gemeinsam mit der Beschreibung zwei Ausführungsbeispiele der Erfindung anhand der Figuren näher erläutert. Dabei zeigt
- Fig.1: eine Seitenansicht der Vorrichtung zu Einzelkommissionierung gemäß einer ersten Ausführungsform;
- Fig. 2: eine Seitenansicht der Vorrichtung zu Einzelkommissionierung gemäß einer zweiten Ausführungsform;
- Fig. 3: eine Bilderfolge zur Darstellung der Funktionsweise der Vorrichtung gemäß der ersten Ausführungsform;
- Fig. 4: eine Bilderfolge zur Darstellung der Funktionsweise der Vorrichtung gemäß der zweiten Ausführungsform;
- Fig. 5: eine schematische Darstellung der Schub- und Zugstange gemäß einer ersten Ausführungsform, und
- Fig. 6: eine schematische Darstellung der Schub- und Zugstange gemäß einer zweiten Ausführungsform.

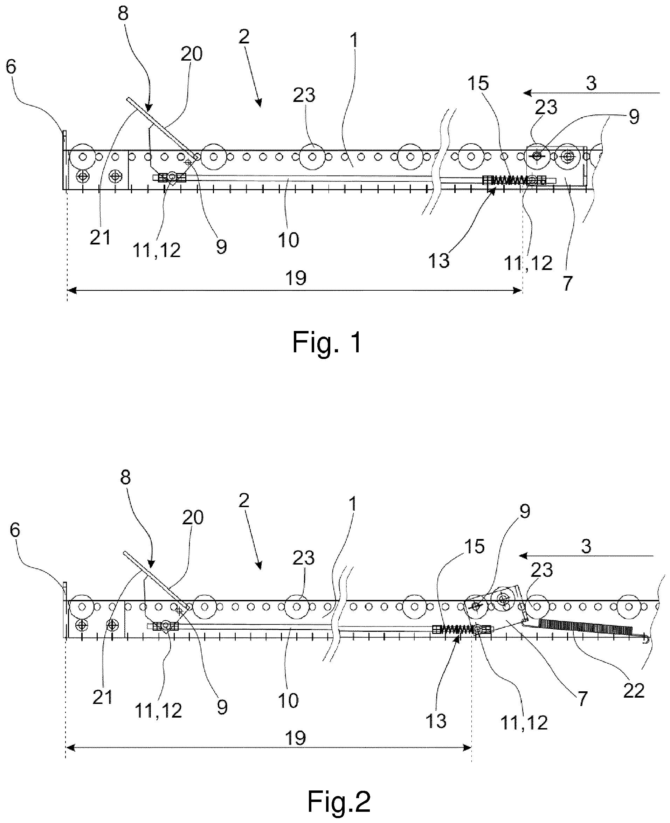

Die Figuren 1 und 2 zeigen jeweils eine Seitenansicht der erfindungsgemäßen Vorrichtung zur Einzelkommissionierung, mit einer in einem Gestell 1 unter Neigung zur Horizontalen angeordneten, also in Förderrichtung leicht abfallenden Rollenbahn 2. Das Gestell 1 besteht aus zwei parallel verlaufenden Längsträgern mit quer dazu angeordneten, frei drehbar gelagerten Rollen 23. Die Rollen 23 sind über die Länge des Gestells 1 verteilt angeordnet, wobei auch eine unregelmäßige Anordnung denkbar ist. Durch ihre Neigung bildet die Rollenbahn 2 einen Förderweg 3, auf dem sich durch die Erdbeschleunigung Ladungsträger 4 ohne Fremdeinwirken von dem höheren zu dem niedrigeren Niveau rollend bewegen.

Weitere Bestandteile der Vorrichtung sind eine in den Förderweg 3 der Rollenbahn 2 hineinragende Bedienklappe 8 am Ende der Rollenbahn 2, und eine Sperre 7. Die Sperre 7 ist in einem Abstand von mindestens einem Ladungsträger 4 von einem am unteren Ende der Rollenbahn 2 starr befestigten Anschlag 6 angeordneten. Sind Ladungsträger 4 am Ende der Rollenbahn 2 angelangt, werden sie durch den Anschlag 6 am Verlassen der Rollenbahn 2 gehindert.

Auf der Sperre 7 ist mindestens eine Rolle 23, vorzugsweise sind zwei Rollen 23 drehbar auf ihr gelagert. Beispielsweise ist aber auch die Sperre 7, in einer weiteren Ausführungsform, ohne integrierte Rollen 23 möglich.

Die Bedienklappe 8 und die Sperre 7 sind jeweils schwenkbeweglich auf eigenen, sich quer zur Rollenbahn 2 erstreckenden Schwenkachsen 9 in dem Gestell 1 gelagert.

Zwischen der Bedienklappe 8 und der Sperre 7 ist eine Schub- und Zugstange 10 ausgebildet, die mit ihrem einen Ende mit der Sperre 7 und mit ihrem anderen Ende mit der Bedienklappe 8 jeweils durch Gelenke 11 gekoppelt ist, deren Gelenkachsen 12 sich parallel zueinander erstrecken und jeweils unterhalb der Schwenkachsen 9 angeordnet sind, also tiefer als die Schwenkachsen 9 liegen. Denkbar ist auch eine Anordnung der Gelenkachsen 12 oberhalb der Schwenkachsen 9 oder neben den Schwenkachsen 9.

Bestandteil der Schub- und Zugstange 10 ist ein längenveränderlicher Abschnitt 13, der vorzugsweise zweiteilig ausgebildet ist. Ferner umfasst der längenveränderliche Abschnitt 13 ein erstes Federelement 15. Der längenveränderliche Abschnitt 13 ist dazu ausgebildet, abhängig von den wirkenden Kraftvektoren eine Veränderung der wirksamen Länge der Schub- und Zugstange 10 in einem bestimmten Rahmen zu ermöglichen.

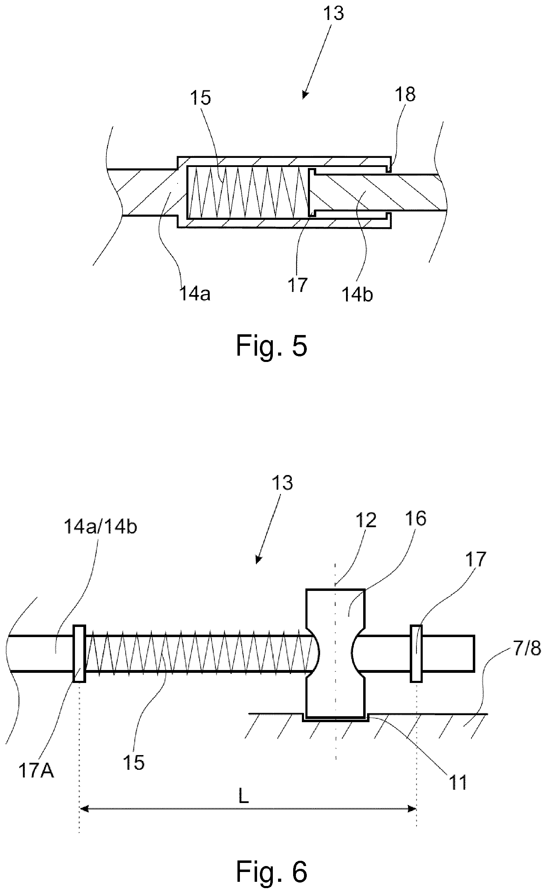

Die in Figur 1 bis 4 verwendete Schub- und Zugstange 10 ist in Rollenbahn-Längsrichtung stauchbar ausgebildet, indem bei der Stauchung das erste Federelement 15 unter Verkürzung gestaucht wird. Eine Verlängerung der Schub- und Zugstange 10 über eine bestimmte Länge hinaus ist hingegen nicht möglich. Auf die Funktionsweise und mögliche weiteren Ausführungsformen der Schub- und Zugstange 10, einschließlich ihres längenveränderlichen Abschnitts 13, wird im späteren Verlauf zu Figur 5 und 6 genauer eingegangen.

Figur 2 zeigt bei einer zweiten Ausführungsform ein zweites Federelement 22, welches mit einem Ende an der Sperre 7 und mit dem anderen Ende an dem Gestell 1 der Rollenbahn 2 befestigt ist. Dieses Federelement 22 ist bestrebt, die Sperre 7 zu sich hin, und damit in die über die Transportebene der Rollenbahn 2 hinaus angehobene Stellung zu bringen, wodurch bei nicht auf Druck belasteter Schub- und Zugstange 10 die Sperre 7 den Förderweg 3 für einen nachrückenden Ladungsträger 4 sperrt bzw. blockiert. Abgesehen von dem zweiten Federelement 22 sind die erste (Fig. 1) und zweite (Fig. 2) Ausführungsform identisch.

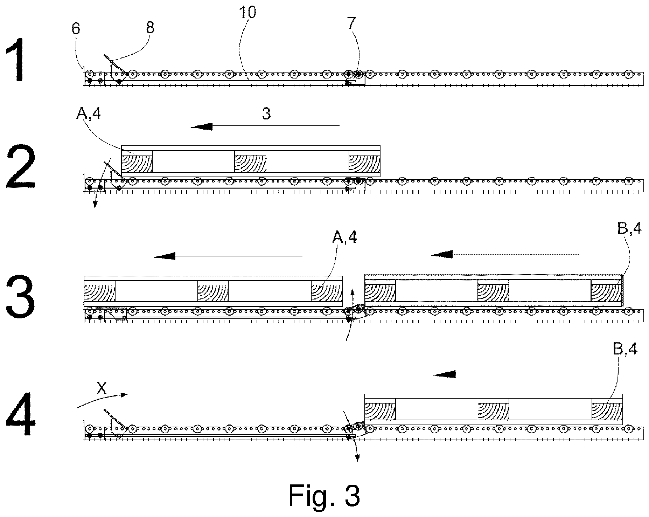

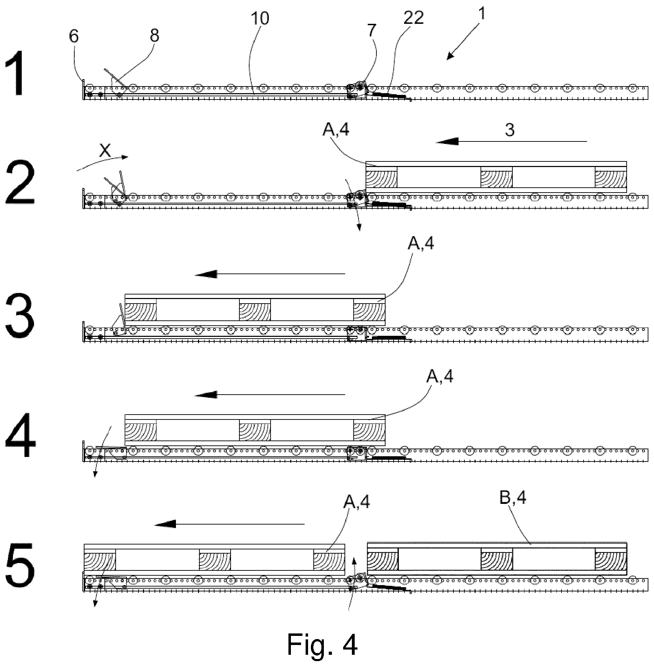

Die Figuren 3 und 4 offenbaren anhand von jeweils vier bzw. fünf Zuständen das Funktionsprinzip der Vorrichtung zur Einzelkommissionierung, wobei jeder Zustand einen Moment der Funktionsweise der Vorrichtung festhält. Figur 3 offenbart dabei die Funktionsweise der Vorrichtung gemäß der ersten und Figur 4 die Funktionsweise der zweiten Ausführungsform.

Der Zustand "1" der Figur 3 zeigt die Rollenbahn 2 zunächst ohne Ladungsträger 4. Die Sperre 7 ist abgesenkt, so dass sie den Förderweg 3 freigibt. Die über die Schub- und Zugstange 10 mit der Sperre 7 kraftschlüssig verbundene Bedienklappe 8 steht dabei schräg zur Rollenbahn 2 und ragt in den Förderweg 3.

Die Sperre 7 ist mit einem solchen Eigengewicht ausgebildet, dass bei unbelasteter Bedienklappe 8 die Sperre 7 die Bedienklappe 8 in die zur Rollenbahn 2 schräge und damit in den Förderweg 3 ragende Position bringt. In diesem Zustand ist die Schub- und Zugstange 10 auf Druck belastet, wobei die Druckkraft zu niedrig ist, um eine Stauchung der Schub- und Zugstange 10 zu verursachen.

Der Zustand "2" der Figur 3 zeigt den Moment, in dem ein Ladungsträger 4, hier in Form einer mit Kommissionsware beladenen Palette A, bereits teilweise in den Bereich der Einzelkommissionierung 19 gerollt ist und mit dem vorderen Ende die Bedienklappe 8 kontaktiert, wobei die Bedienklappe 8 gerade aus ihrer ursprünglich schrägen Position abgesenkt wurde. Folglich entsteht ein Druck auf die Schub- und Zugstange 10, wobei die Sperre 7, trotz Absinken der Bedienklappe 8, weiterhin in ihrer abgesenkten Position unterhalb der Palette A bleibt.

Zwar wurde durch die in Richtung der Horizontalen schwenkenden Bedienklappe 8 ein Druck auf die Schub- und Zugstange 10 ausgeübt, jedoch wird die Schub- und Zugstange 10 in diesem Zustand gestaucht, da die Gegenkraft durch das erste Federelement 15 im längenveränderlichen Abschnitt 13 der Schub- und Zugstange 10 geringer ist, als die von der Palette A auf die Sperre 7 ausgeübte Gewichtskraft. Somit bleibt die Sperre 7 abgesenkt, solange sie durch die Gewichtskraft der über ihr angeordneten Palette A belastet wird.

Im Zustand "3" liegt die Palette A mit ihrem in Richtung des Förderweges 3 weisendem Ende an dem Anschlag 6 am Ende der Rollenbahn 2 an, die Bedienklappe 8 ist abgesenkt. Die Sperre 7 ist nicht mehr durch die Palette A belastet, so dass das erste Federelement 15 seine Formänderungsenergie abgeben hat. Die Schub- und Zugstange 10 nimmt ihre nicht gestauchte Länge ein und die Sperre 7 ihre schräge, den Förderweg 3 blockierende Position.

Ebenfalls ist eine weitere beladene Palette B bereits bis zur Sperre 7 vorgerückt und wird nun durch diese am Weiterrollen gehindert.

In Zustand "4" wurde die Palette A aus dem Bereich der Einzelkommissionierung 19 entfernt. Die an der Sperre 7 anliegende Palette B wird unverändert durch die Sperre 7 gehalten. Denn die Sperre 7 ist dazu ausgebildet, dass sie bei Kontakt mit einem weiteren Ladungsträger 4, bei unbelasteter Schub- und Zugstange 10, den Förderweg 3 weiterhin blockiert.

Anhand eines Pfeiles X wird angedeutet, wie die Bedienklappe 8 von der schrägen in Richtung einer nahezu vertikalen Position, also entgegen der Förderrichtung 3, bewegt wird. Die Bedienklappe 8 ist eine Platte mit einer oberen, zum Ladungsträger 4 gewandten Seite 20 und einer unteren, von dem Ladungsträger 4 abgewandte Seite 21, wobei die untere Seite 21 als eine mit dem Fuß bedienbare Trittfläche ausgebildet ist. Durch einen Tritt der Bedienperson gegen die Trittfläche und somit entgegen der Richtung des Förderweges 3 wird die Bedienklappe 8 kurzzeitig von ihrer schrägen in die nahezu vertikale Position verschwenkt. Dadurch wird die Schub- und Zugstange 10 kurzzeitig auf Zug belastet, wodurch die Sperre 7 in ihre abgesenkte Position gezogen wird und somit den Förderweg 3 für die weitere Palette B frei gibt. Die weitere Palette B kann nun in den Bereich der Einzelkommissionierung 19 rollen, so dass sich der Ablauf ab Zustand "2" wiederholt.

Somit ist gemäß der ersten Ausführungsform der Bereich zur Einzelkommissionierung 19 für den ersten Ladungsträger 4 frei, so dass dieser nicht an der Sperre 7 aufgehalten wird, bevor er in den Bereich zur Einzelkommissionierung 19 gelangt.

In der Figur 4, anhand derer die zweite Ausführungsform verdeutlicht werden soll, ist in Zustand "1", wie bereits bekannt, die Sperre 7 durch ein zweites Federelement 22 in ihre Sperrposition gezwungen. Das zweite Federelement 22 ist so ausgebildet, dass es die Gewichtskraft der Sperre 7 überwindet und bei unbelasteter Schub- und Zugstange 10, die Sperre 7 bei freier Rollenbahn 2 immer in eine sperrende Position bringt. Die Bedienplatte 8 ist dabei in ihrer zur Rollenbahn 2 schrägen Position. Auch hier wirkt auf die Schub- und Zugstange 10 eine Druckkraft, wobei die Druckkraft ebenfalls zu niedrig ist, um die Stauchung der Schub-und Zugstange 10 zu verursachen.

In Zustand "2" liegt eine Palette A an der Sperre 7 an. Anhand des Pfeils X wird angedeutet, dass die Bedienklappe 8 von der schrägen in Richtung einer vertikalen Position, also entgegen der Förderrichtung, geschwenkt wird. Dies geschieht manuell durch einen Tritt gegen die Trittfläche, also die Unterseite 21 der Bedienklappe 8. Mithin wird die Schub- und Zugstange 10 auf Zug belastet, wodurch die Sperre 7 in ihre abgesenkte Position parallel zur Rollenbahn 2, geschwenkt wird und den Förderweg 3 für die Palette A frei gibt.

In Zustand "3" kontaktiert die Palette A die Bedienklappe 8, wobei diese zu ihrer ursprünglichen Position gemäß Zustand "2" durch die Palette A noch nicht verschwenkt wurde. Ferner befindet sich die Palette A mit einem Teilbereich über der horizontal liegenden Sperre 7.

Zustand "4" stellt den unmittelbaren Folgemoment auf Zustand "3" dar. Die Palette A hat die Bedienklappe 8 in eine horizontale Position gedrückt, wobei die Palette A ihre Lage auf der Rollenbahn 2 gegenüber Zustand "3" kaum verändert ist. Auch die Sperre 7 ist trotz Absenken der Bedienklappe 8 weiterhin in ihrer horizontalen Position unterhalb der Palette A. Zwar wurde durch die in die Horizontale geschwenkte Bedienklappe ein Druck auf die Schub- und Zugstange 10 ausgeübt, jedoch wird die Schub- und Zugstange 10 gestaucht, da die Federkraft des ersten Federelements 15 im längenveränderlichen Abschnitt 13 der Schub- und Zugstange 10 geringer ist, als die von der Palette A auf die Sperre 7 ausgeübte Gewichtskraft. Somit bleibt die Sperre 7 in einer horizontalen Position, solange sie durch die Gewichtskraft der Palette A belastet wird.

In Zustand "5" ist die Palette A am Anschlag 6 zum Stehen gekommen und befindet sich somit nicht mehr über der Sperre 7. Folglich ist die in dem ersten Federelement 15 gespeicherte Formänderungsenergie wieder abgegeben, und die Sperre 7 befindet sich in der sperrenden Position, an ihr ist eine weitere Palette B bereits zur Anlage gekommen.

Somit muss gemäß der zweiten Ausführungsform der Bereich zur Einzelkommissionierung 19 für jeden Ladungsträger 4 erst manuell frei gegeben werden, bevor dieser in den Bereich zur Einzelkommissionierung 19 rollen kann.

Die Figuren 5 und 6 zeigen zwei Ausführungsformen der Schub- und Zugstange 10 und des längenveränderlichen Abschnitts 13. Beide Ausführungsformen sind stauchbar ausgebildet, zugleich ist eine Verlängerung über eine bestimmte Länge hinaus nicht möglich.

Gemäß den Figuren 1 bis 4 liegen die Gelenkachsen 12, die als Lagerung der Schub- und Zugstange 10 an der Sperre 7 und an der Bedienklappe 8 ausgebildet sind, tiefer als die Schwenkachsen 9, auf denen die Sperre 7 und die Bedienklappe 8 an dem Gestell 1 schwenkbar sind. Aufgrund dieser geometrischen Anordnung muss die Schub- und Zugstange 10 stauchbar ausgebildet sein. Bei einem Tausch der Anordnung der Gelenk- und der Schwenkachsen 9, 12 wäre eine Umkehrung der Funktionsweise des längenveränderlichen Abschnitts 13 notwendig, sodass dieser zwar dehnbar, aber nicht stauchbar ausgebildet sein müsste.

Figur 5 schlägt eine Schub- und Zugstange 10 vor, deren längenveränderlicher Abschnitt 13 einen ersten und einen zweiten Gleitabschnitt 14a, 14b umfasst. Der zweite Gleitabschnitt 14b ist nach Art eines Kolbens ausgebildet, wobei der erste Gleitabschnitt 14a als Zylinder ausgebildet ist, so dass der erste Gleitabschnitt 14b in Förderrichtung verschiebbar gegenüber dem zweiten Gleitabschnitt 14a ist. Der zweite Gleitabschnitt 14b weist am stirnseitigen Ende, hin zum ersten Gleitabschnitt 14a, eine Aufweitung 17 auf, wobei der erste Gleitabschnitt 14a am stirnseitigen Ende und zum zweiten Gleitelement 14b hin einen innenseitigen Absatz 18 aufweist. Zwischen den Gleitabschnitten 14a, 14b ist das erste Federelement 15 angeordnet, das dazu ausgebildet ist, die beiden Gleitabschnitte 14a, 14b auseinander zu drücken, so dass im unbelasteten Fall der Schub- und Druckstange 10 die Aufweitung 17 des zweiten Gleitabschnittes 14b an dem Absatz 18 des ersten Gleitabschnitts 14a zur Anlage kommt. Die Schub- und Druckstange hat dann ihre maximale wirksame Länge.

Figur 6 zeigt eine andere Ausführungsform der Schub- und Druckstange 10, wobei der längenveränderliche Abschnitt 13 einen Gleitabschnitt 14a, 14b umfasst, der mit einem ersten Ende mittelbar an der Gelenkachse 12 der Sperre 7 oder der Bedienklappe 8 drehgelagert und mit einem zweiten Ende gleitend an der Bedienklappe 8 oder an der Sperre 77 gelagert ist. Auf der Seite der gleitbeweglichen Lagerung ist der Gleitabschnitt 14a, 14b mit dem zweiten Ende in einem Gleitlager 16 angeordnet, wobei das Gleitlager 16 ein zweites Gelenk 11 der Schub- und Zugstange 10 darstellt.

Der Gleitabschnitt 14a,14b weist vor und hinter dem Gleitlager 16 Aufweitungen 17 auf, die zueinander mit einer Distanz L beanstandet sind. Um auch in dieser Ausführungsform ein erstes Federelement 15 zu nutzen, um die Formänderungsenergie zu speichern, wird ein solches um den Gleitabschnitt 14a oder 14b angeordnet. Dabei kommt ein erstes Ende des ersten Federelements 15 an einer ersten Aufweitung 17A und das zweite Ende an dem Gleitlager 16 zur Anlage, wobei die erste Aufweitung 17 auf dem Gleitabschnitt 14a, 14b zwischen der Sperre 7 und der Bedienplatte 8 ausgebildet ist.

Auch andere Ausführungsformen sind möglich, mit denen eine Längenveränderung der Schub- und Zugstange 10 sowie die Reversibilität dieser zu ihrer ursprünglichen und maximalen Länge ermöglicht wird.

### Bezugszeichenliste

- 1: Gestell
- 2: Rollenbahn
- 3: Förderweg
- 4: Ladungsträger

- 6: Anschlag
- 7: Sperre
- 8: Bedienklappe
- 9: Schwenkachsen
- 10: Schub- und Zugstange

- 11: Gelenk
- 12: Gelenkachse
- 13: längenveränderlicher Abschnitt
- 14a: erster Gleitabschnitt
- 14b: zweiter Gleitabschnitt
- 15: erstes Federelement

- 16: Gleitlager
- 17: Aufweitung
- 17A: erste Aufweitung
- 18: Absatz
- 19: Bereich der Einzelkommissionierung
- 20: obere Seite

- 21: untere Seite
- 22: zweites Federelement
- 23: Rolle

- A: Palette
- B: Palette
- L: Distanz
- X: Pfeil

## Patentansprüche

1. Vorrichtung zur Einzelkommissionierung mit einer in einem Gestell (1) unter Neigung zur Horizontalen angeordneten Rollenbahn (2) mit einem Förderweg (3), für darauf verfahrbare Ladungsträger (4), mit einer in den Förderweg (3) der Rollenbahn (2) hineinragenden, durch einen sich entlang des Förderweges (3) bewegenden Ladungsträger (4) betätigbaren Bedienklappe (8), mit einer im Abstand von mindestens einem Ladungsträger (4) von einem am Ende der Rollenbahn (2) angeordneten Anschlag (6) angeordneten und in den Förderweg (3) einschwenkbaren Sperre (7) sowie mit einem mechanischen Verbindungselement zwischen der Bedienklappe (8) und der Sperre (7), wobei die Bedienklappe (8) und die Sperre (7) jeweils auf eigenen, sich quer zur Rollenbahn (2) erstreckenden Schwenkachsen (9) in dem Gestell (1) gelagert sind, **dadurch gekennzeichnet, dass** das Verbindungselement als eine Schub- und Zugstange (10) ausgebildet ist, die mit ihrem einen Ende mit der Sperre (7) und mit ihrem anderen Ende mit der Bedienklappe (8) durch Gelenke (11) gekoppelt ist, deren Gelenkachsen (12) sich parallel zu den Schwenkachsen (9) erstrecken, und wobei die Schub- und Zugstange (10) einen längenveränderlichen Abschnitt (13) umfasst.

2. Vorrichtung nach Anspruch 1, **dadurch gekennzeichnet, dass** der längenveränderliche Abschnitt (13) einen ersten oder einen zweiten Gleitabschnitt (14a, 14b) umfasst, der mit einem ersten Ende mittelbar an der Gelenkachse (12) der Sperre (7) oder der Bedienklappe (8) drehgelagert ist, und mit einem zweiten Ende gleitend an der Bedienklappe (8) oder an der Sperre (7) gelagert ist.

3. Vorrichtung nach Anspruch 1, **dadurch gekennzeichnet, dass** der längenveränderliche Abschnitt (13) einen ersten und einen zweiten Gleitabschnitt (14a, 14b) umfasst und der erste Gleitabschnitt (14a) verschiebbar gegenüber dem zweiten Gleitabschnitt (14b) ist.

4. Vorrichtung nach Anspruch 2 oder 3, **dadurch gekennzeichnet, dass** Bestandteil des längenveränderlichen Abschnitts (13) ein erstes Federelement (15) ist, welches zumindest mit dem ersten und/oder dem zweiten Gleitabschnitt (14a, 14b) und/oder zumindest mittelbar mit der Sperre (7) und/oder mit der Bedienklappe (8) gekoppelt ist.

5. Vorrichtung nach Anspruch 2, **dadurch gekennzeichnet, dass** der erste oder zweite Gleitabschnitt (14a, 14b) mit dem zweiten Ende in einem Gleitlager (16) angeordnet ist, wobei der erste oder zweite Gleitabschnitt (14a, 14b) vor und hinter dem Gleitlager (16) Aufweitungen (17) aufweist, die zueinander mit einer Distanz (L) beanstandet sind.

6. Vorrichtung nach Anspruch 3, **dadurch gekennzeichnet, dass** der zweite Gleitabschnitt (14b) am stirnseitigen Ende hin zum ersten Gleitelement (14a) eine Aufweitung (17) aufweist, wobei das erste Gleitelement (14a) am stirnseitigen Ende und zum zweiten Gleitelement (14b) hin einen innenseitigen Absatz (18) aufweist.

7. Vorrichtung nach einem der vorhergehenden Ansprüche, **dadurch gekennzeichnet, dass** in abgesenkter Stellung der Bedienklappe (8) die Sperre (7) den Förderweg (3) blockiert.

8. Vorrichtung nach einem der vorhergehenden Ansprüche, **dadurch gekennzeichnet, dass** die Sperre (7), bei ihrem Kontakt mit einem weiteren Ladungsträger (4), bei unbelasteter Schub- und Zugstange (10) den Förderweg (3) blockiert.

9. Vorrichtung nach einem der vorhergehenden Ansprüche, **dadurch gekennzeichnet, dass** in einer angehobenen Stellung der Bedienklappe (8) die Schub- und Zugstange (10) auf Zug belastet ist, wobei die Sperre (7) den Förderweg (3) nicht blockiert.

10. Vorrichtung nach einem der vorhergehenden Ansprüche, **dadurch gekennzeichnet, dass** die Bedienklappe (8) eine Platte mit einer oberen, zum Ladungsträger (4) gewandten Seite (20) und einer unteren, von dem Ladungsträger abgewandten Seite (21) ist, wobei die untere Seite (21) als eine mit dem Fuß bedienbare Trittfläche ausgebildet ist.

11. Vorrichtung nach einem der vorhergehenden Ansprüche, **dadurch gekennzeichnet, dass** die Sperre (7) bei nicht auf Druck belasteter Schub- und Zugstange (10) eine abgesenkte Stellung einnimmt.

12. Vorrichtung nach einem der Ansprüche 1 bis 10, **gekennzeichnet durch** ein zweites Federelement (22) welches bestrebt ist, die Sperre (7) in eine angehobene Stellung zu bringen.

13. Vorrichtung nach Anspruch 12, **dadurch gekennzeichnet, dass** die Sperre (7) bei nicht auf Druck belasteter Schub- und Zugstange (10) und unbelastetem zweiten Federelement (22) den Förderweg (3) blockiert.
